# EUROPEAN PATENT APPLICATION

(11) **EP 4 708 036 A1**
(43) Date of publication of application: **11.03.2026**
(21) Application number: 25199993.4
(22) Date of filing: 03.09.2025
(51) Int. Cl.: G06F 9/30, G06F 9/38

(54) **PROCESSING VECTOR INSTRUCTIONS**

(30) Priority: 09.09.2024 GB 202413195
(71) Applicant: Imagination Technologies Limited, Kings Langley Hertfordshire WD4 8LZ (GB)
(72) Inventor: VRABEL, Peter, Kings Langley, WD4 8LZ (GB)
(74) Representative: Page White Farrer

(57) **Abstract**

A vector processing unit contains a vector mask register (VMR) for storing a vector mask written by mask-producing instructions. It also contains a buffer for storing the youngest (i.e. most recently) produced vector mask by in-flight mask-producing instructions. Whenever a mask-producing instruction that will (eventually) update the vector mask register produces a result, the buffer is updated in parallel with the existing storage (i.e. the VMR) to store the result. The mask-consuming instruction uses the value from the buffer or the VMR.

## Description

### CROSS-REFERENCE TO RELATED APPLICATION

This application claims priority from UK patent application GB2413195.5 filed on 9 September 2024, which is herein incorporated by reference in its entirety.

### TECHNICAL FIELD

The present disclosure relates to the processing of instructions by a vector processing unit.

### BACKGROUND

A vector processing unit (VPU) is responsible for executing vector instructions and scalar floating-point instructions, which may include cryptographic instructions. The VPU receives decoded instructions from a central unit (e.g. a main pipeline control (MPC)) and then executes the instructions. Execution is primarily performed by reading the vector or floating point register files, sending the data through a vector data path, and then writing the result back to the vector or floating point register file.

The operation of some vector instructions depends on a vector mask value. The vector mask value indicates which elements of a vector are to be operated by a vector instruction. The vector instruction then only operates on elements of the vectors whose corresponding bit in the mask register is set. The vector mask value is stored in a vector mask register (VMR), which can be updated by almost any vector instruction. For a vector instruction to execute correctly, it must use the correct vector mask value, which may not necessarily be the value that is stored in the VMR The correct vector mask value for an instruction may not be the value that is stored in the VMR when there is an earlier instruction that will update the VMR, but has not yet done so. A mask-producing instruction is an instruction that produces a vector mask to be written to the VMR. A mask-consuming instruction is an instruction that uses a vector mask.

### SUMMARY

This Summary is provided merely to illustrate some of the concepts disclosed herein and possible implementations thereof. Not everything recited in the Summary section is necessarily intended to be limiting on the scope of the disclosure. Rather, the scope of the present disclosure is limited only by the claims.

A problem arises in that there may be multiple in-flight writes of the vector mask value (shortened to "vector mask" from hereon in) to the VMR. For example, a write may have produced the result data that will be written to the VMR register but may not yet be ready to actually write the result to the VMR. In this case, the result is stored in storage other than the VMR register. In other words, there is storage in the VPU that stores the results of instructions that will update the VMR.

When a vector instruction starts executing, it must use the correct architectural value of the VMR, which might be the value stored in the VMR register itself, or any of the other storage locations for results from incomplete instructions. Depending on how mask-consuming instructions are ordered with respect to mask-producing instructions, different instructions may need different values of the VMR, and may need to read different parts of storage for incomplete instructions. Put another way, a result in the VMR may not be the final result. E.g. an instruction may cause an update to the VMR but it may not have yet written that update to the VMR.

Previously, instructions that require the vector mask waited (i.e. could not continue to be processed / executed) until the VMR had been updated by all instructions that have a result to be written to the VMR, which causes latency issues. Alternatively, instructions that require the vector mask would collect all speculative versions (e.g. stored in memory configured to temporarily store data before it is written to a register, referred to herein as a "result cache") and determine which is the correct value to use, which is a costly calculation in terms of time and processing.

The present invention uses a buffer that stores the youngest (i.e. most recent) of the speculative values of the vector mask. Whenever a mask-producing instruction that will (eventually) update the VMR produces a result, the buffer is updated in parallel with the existing storage (e.g. the result cache) to store the result. That is, the buffer is updated at the same time as the result cache is updated. The operation of the existing VMR is unchanged.

A mask-consuming instruction that requires a vector mask either obtains the value from the buffer or the VMR. Whether the value is obtained from the buffer or the VMR may be predetermined at the time the instruction is received and/or dispatched by the VPU. Whether the buffer or VMR is used may be tracked with the control state (i.e. logic) for that instruction. For example, whether the mask-consuming instruction uses the buffer or VMR may be controlled by hazarding (e.g. flags)). The control state and/or hazarding may be stored in instruction control storage, as described below.

With this invention, instead of having to work out, as instructions are dispatched, which mask-producing instruction is the youngest (i.e. most recent) instruction, in order to determine which speculative value of the vector mask should be used by a mask-consuming instruction, the youngest update to the VMR is stored separately in the buffer. There is therefore an area and power benefit because the vector mask is only ever obtained from one of two locations (the VMR or the buffer), rather than multiple locations (the VMR or multiple other storage locations). The timing of processing mask-consuming instructions is also improved as there is no calculation to decide which of the multiple speculative values of the vector mask to use.

According to one aspect disclosed herein, there is provided a computer-implemented method performed by a vector processing unit. The vector processing unit comprises a vector mask register (VMR) and a buffer. Each of the VMR and the buffer is configured to store a vector mask value. Vector mask producing instructions cause a vector mask value to be produced and written to the VMR. Processing of vector mask consuming instructions is dependent on a vector mask value. The method comprises updating the VMR with a respective vector mask value written to the VMR by a respective vector mask producing instruction and updating the buffer with a respective vector mask value produced by a respective in-flight vector mask producing instruction. The buffer is updated each time a respective vector mask value is produced. A vector mask consuming instruction is processed by: determining whether the vector mask consuming instruction requires the respective vector mask value from the VMR or the buffer, and based on said determining, obtaining the respective vector mask value from the VMR or the buffer.

In embodiments, determining whether the vector mask consuming instruction requires the respective vector mask value from the VMR or the buffer may be determined at the point that the vector mask consuming instruction is received by the vector processing unit and before the vector mask consuming instruction is dispatched.

In embodiments, the vector processing unit may comprise instruction control storage configured to store control logic and/or state associated with the vector mask consuming instruction. The control logic and/or state may indicate whether the vector mask consuming instruction requires the respective vector mask value from the VMR or the buffer.

In embodiments, the instruction control storage may be configured to store respective control logic and/or state associated with respective in-flight vector mask producing instructions. The respective control logic and/or state may indicate whether the in-flight vector mask producing instruction has written a respective vector mask value to the VMR.

In embodiments, the method may comprise determining, based on the respective control logic and/or state associated with a respective in-flight vector mask producing instruction that the respective in-flight vector mask producing instruction has not yet written a respective vector mask value to the VMR; and configuring the control logic and/or state associated with the vector mask consuming instruction to indicate that the vector mask consuming instruction requires the respective vector mask value from the buffer.

In embodiments, the method may comprise determining, based on the respective control logic and/or state associated with a respective in-flight vector mask producing instruction that the respective in-flight vector mask producing instruction has written a respective vector mask value to the VMR; and configuring the control logic and/or state associated with the vector mask consuming instruction to indicate that the vector mask consuming instruction requires the respective vector mask value from the VMR.

In embodiments, the control logic and/or state associated with the vector mask consuming instruction may comprise a flag, and wherein the instruction control storage is configured such that, the flag being set indicates that the vector mask consuming instruction requires the respective vector mask value from the buffer.

According to another aspect disclosed herein, there is provided a vector processing unit comprising a vector mask register (VMR) configured to store a vector mask value most recently written to the VMR by a vector mask producing instruction, and a buffer configured to store a vector mask value most recently produced by a vector mask producing instruction. The vector processing unit is configured to process a vector mask consuming instruction by determining whether the vector mask consuming instruction requires the vector mask value stored in the VMR or the buffer, and based on said determining, obtaining the vector mask value from the VMR or the buffer.

The processing system may be embodied in hardware on an integrated circuit. There may be provided a method of manufacturing, at an integrated circuit manufacturing system, a processing system. There may be provided an integrated circuit definition dataset that, when processed in an integrated circuit manufacturing system, configures the system to manufacture a processing system. There may be provided a non-transitory computer readable storage medium having stored thereon a computer readable description of a processing system that, when processed in an integrated circuit manufacturing system, causes the integrated circuit manufacturing system to manufacture an integrated circuit embodying a processing system.

There may be provided an integrated circuit manufacturing system comprising: a non-transitory computer readable storage medium having stored thereon a computer readable description of the processing system; a layout processing system configured to process the computer readable description so as to generate a circuit layout description of an integrated circuit embodying the processing system; and an integrated circuit generation system configured to manufacture the processing system according to the circuit layout description. The layout processing system may be configured to determine positional information for logical components of a circuit derived from the integrated circuit description so as to generate the circuit layout description of the integrated circuit embodying the graphics processing system.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows an example processing system for processing instructions by a vector processing unit;
Figure 2 shows two examples of updating a vector mask register;
Figure 3 shows a computer system in which a processing system is implemented; and
Figure 4 shows an integrated circuit manufacturing system for generating an integrated circuit embodying a processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

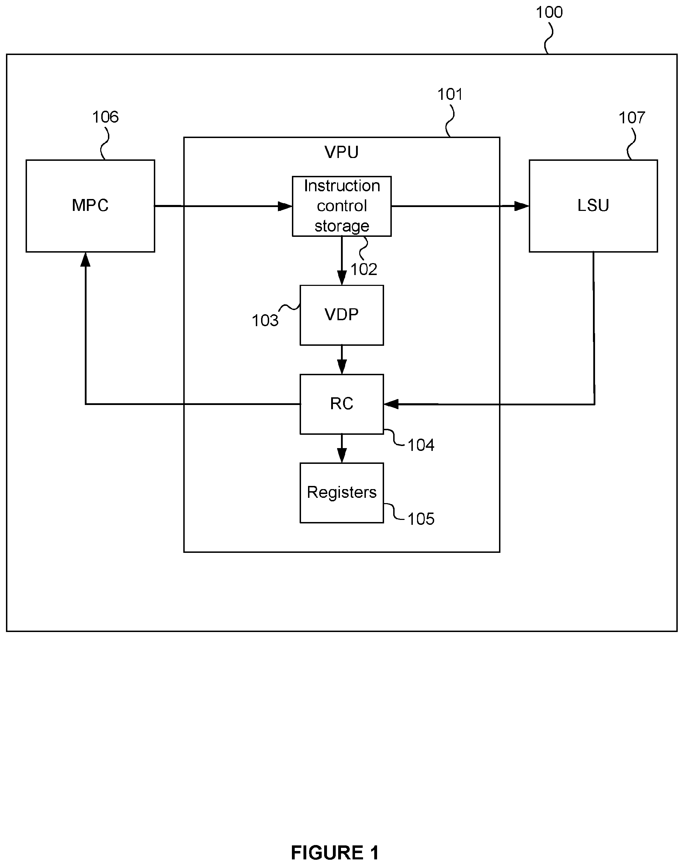

Figure 1 illustrates an example processing system 100 for processing vector processing unit (VPU) instructions. Herein, a VPU instruction refers to any instruction processed (i.e. executed) by a VPU 101. For example, the instruction may be a vector instruction, a scalar floating-point instruction, a vector cryptographic instruction, or a matrix instruction.

The processing system 100 may be or form part of a RISC (e.g. RISC-V) processing system.

The VPU 101 typically includes instruction control storage 102 which contains control and tracking logic for micro-ops of VPU instructions. Some processing systems refer to the instruction control storage 102 as "an operation cache (OC). Other systems may use a pipeline that is configured to handle the execution of vector instructions, instead of dedicated instruction control storage 102. Either way, the VPU 101 has storage for not-yet-dispatched instructions, and will have storage (e.g. a results cache) for the results of instructions that will update the VMR.

The VPU 101 will also typically include a vector data path (VDP) 103 configured to calculate the result of data-processing VPU instructions, and a results cache (RC) 104 configured to store data for VPU instructions which have executed but not yet written back to memory (e.g. one or more registers 105). The VPU 101 may comprise additional components.

The VPU 101 is configured to accept (i.e. receive) decoded VPU instruction control from a main pipeline control (MPC) 106 of a CPU. The MPC 106 is also commonly referred to as a data processing unit (DPU). Any reference to MPC below may be replaced with "control unit" or DPU, unless the context requires otherwise.

The processing system 100 comprises an interface between the VPU 101 and the MPC 106, the interface being configured to pass VPU instructions and data between the VPU 101 and the MPC 106. The VPU 101 is configured to receive decoded instructions from the MPC 106, and then executes the instructions. Execution is primarily performed by reading the vector or floating point register files, sending the data through the VDP 103, then writing the result back to the vector or floating point register file.

The processing system 100 also contains one or more interfaces between the VPU 101 and LSUs 107, the LSUs 107 being configured to perform vector loads and stores and floating point loads and stores.

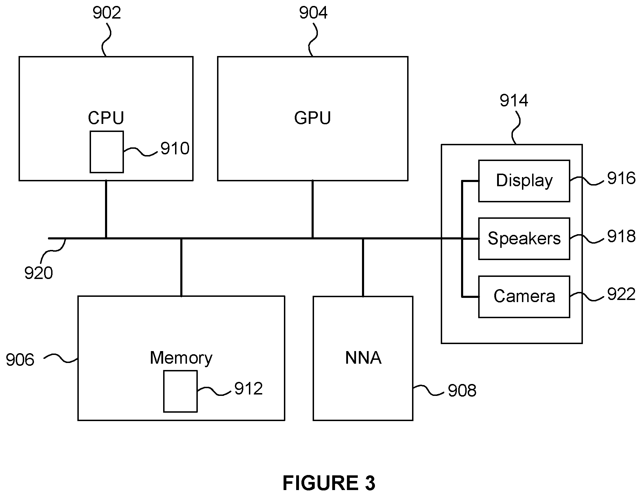

The VPU 101, MPC 107 and LSU 108 are all components of a central processing unit (CPU), e.g. CPU 902 shown in Figure 3.

The VPU 101 may, in some situations, run ahead of the MPC 106, meaning that some instructions may have finished executing, and have the result available, before the instruction has been architecturally committed. In this case, the result is written to the result cache 104 and then sent from the result cache 104 into the appropriate register file 105 once the instruction is committed.

The following definitions are used throughout the present disclosure. "Issue" refers to when an instruction is sent from the MPC 107 to the VPU 101. "Commit" refers to when an instruction or micro-op becomes guaranteed to update architectural state. It cannot do any such update until it's committed. "Execute" refers to when a micro-op produces a result (e.g. a result that can be written to the architectural state once the instruction is committed). "Writeback" refers to when the micro-op or instruction has finished updating architectural state (e.g. register 106) with a result.

VPU instructions are sent from the MPC 106 to the VPU 101 in order. Instructions may be executed and perform architectural updates out of order, both with respect to other MPC instructions, and also with respect to other VPU instructions.

The VPU 101 includes a vector mask register (VMR) configured to store a vector mask value. More specifically, the VMR is configured to store vector mask values that are written to the VMR by mask-producing instructions. The VMR may form part of the registers 105. That is, the VMR may be a particular register in a set of vector processor registers 105. Alternatively, some systems may have dedicated architectural state for the VMR. The VPU 101 also includes a buffer configured to store a vector mask value. The buffer may be located anywhere in the VPU 101. The buffer may be located in or near the results cache 104, or near to the vector registers 105. Note that only one vector mask value is stored in the VMR at any one time - previous values are replaced when a new value is written to the VMR. The buffer is configured to store vector mask values that are produced by in-flight mask-producing instructions. Here, an in-flight instruction is an instruction that has not yet written its result (in this case, a vector mask value) to a register (in this case, the VMR). When a vector mask is produced, it is stored in the buffer and (eventually) written to the VMR.

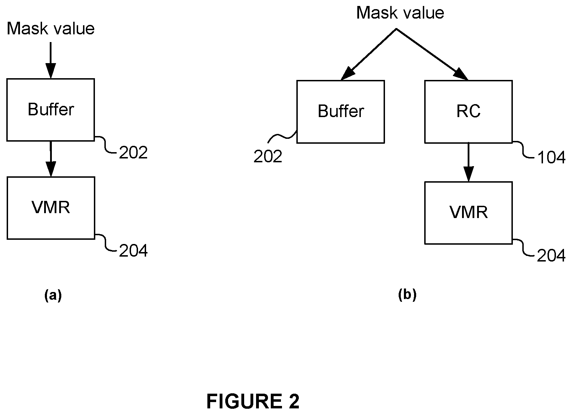

Figure 2 schematically illustrates two examples of how the buffer 202 and VMR 204 may be updated. In the example of Figure 2(a), the mask value may be written to the buffer 202 first, and then written to the VMR 204 using the buffer 202. In this case, the result cache 104 does not need to be (though it still might be) updated for writes to the VMR 204. In the example of Figure 2(b), the mask value may be written into the result cache 104 at the same time as the mask buffer 202 is updated. Then, the write of the mask value to the VMR 204 comes from the results cache 104.

In some cases there may be a delay between providing the vector mask to the buffer and writing the vector mask to the VMR.. For example, there may be an earlier instruction (or some other cause) that is preventing the instruction from writing to the VMR. As another example, at the time a mask-producing instruction produces a vector mask, the vector mask currently stored in the VMR may be required by a mask-consuming instruction which has not yet obtained the vector mask. Thus, the mask-producing instruction may be required to wait until the previous vector mask has been obtained before writing the new vector mask to the VMR.

As described above, with the introduction of a buffer configured to store the most recently produced mask value, a mask-consuming instruction can use the vector mask from the VMR or the buffer. When a mask-consuming instruction is processed (e.g. dispatched), the VPU 101 (e.g. the instruction control storage 102 of the VPU 101) determines whether to use the vector mask from the VMR or the buffer. The instruction then uses the vector mask from the VMR or the buffer.

The VPU 101 (e.g. the instruction control storage 102) may determine whether the mask-consuming instruction is to use the vector mask from the VMR or the buffer when the instruction is received from the MPC 106. Whether the mask-consuming instruction is to use the vector mask from the VMR or the buffer is determined before the mask-consuming instruction is dispatched by the instruction control storage 102.

The instruction control storage 102 of the VPU 101 may be configured to store control logic and/or state associated with each instruction processed by the VPU 101, including the mask-consuming instruction. The instruction control 102 may track whether the mask-consuming instruction is to use the vector mask from the VMR or the buffer. The control logic and/or flag may include a flag that determines whether the vector mask from the VMR or the buffer is used.

Similarly, the instruction control storage 102 may track (e.g. using flags) whether a mask-producing instruction has produced a vector mask but has not yet written the result to the VMR.

The instruction control storage 102 may update the control logic and/or state associated with the mask-consuming instruction based on the processing of mask-producing instructions. That is, if a mask-producing instruction is in-flight and has produced a vector mask which has not yet written to the VMR, the instruction control storage 102 may configure the information associated with the mask-consuming instruction such that the mask-consuming instruction must use the vector mask from the buffer. Conversely, if a mask-producing instruction has written a vector mask to the VMR, the instruction control storage 102 may configure the information associated with the mask-consuming instruction such that the mask-consuming instruction can use the vector mask from the VMR, or at least that the mask-consuming instruction can use the vector mask from the VMR if there are no other in-flight mask-producing instructions that may write to the VMR.

The VPU 101 (e.g. the instruction control 102) may use flags to control the processing of mask-consuming instructions. As a new mask-consuming instruction is sent to the VPU 101, the VPU 101 determines whether there is a flag associated with any mask-producing instruction currently being executed that will produce a vector mask value. If there are no flags, the mask-consuming instruction can read from the VMR. If there is at least one flag, the value currently in the VMR is not the value that is required, so the instruction instead must read from the buffer. The VPU 101 may set a flag for the mask-consuming instruction. When a mask-consuming instruction starts executing, if the flag is set, the instruction uses the data from new buffer, otherwise it uses the data in the VMR. Note that the VPU 101 may work in the alternative way (i.e. a flag being set means that the instruction reads from the VMR instead of the buffer). When the most recent mask-producing instruction writes-back to the VMR (i.e. updates the VMR), the flag for all mask-consuming instructions that consume this instruction is cleared.

Figure 3 shows a computer system in which processing systems described herein may be implemented. The computer system comprises a CPU 902, a GPU 904, a memory 906, a neural network accelerator (NNA) 908 and other devices 914, such as a display 916, speakers 918 and a camera 922. A processing block 910 (corresponding to processing blocks 101) is implemented on the CPU 902. In other examples, one or more of the depicted components may be omitted from the system, and/or the processing block 910 may be implemented on the GPU 904 or within the NNA 908. The components of the computer system can communicate with each other via a communications bus 920. A store 912 is implemented as part of the memory 906.

The processing system of Figures 1 and 2 are shown as comprising a number of functional blocks. This is schematic only and is not intended to define a strict division between different logic elements of such entities. Each functional block may be provided in any suitable manner. It is to be understood that intermediate values described herein as being formed by a processing system need not be physically generated by the processing system at any point and may merely represent logical values which conveniently describe the processing performed by the processing system between its input and output.

The processing system described herein may be embodied in hardware on an integrated circuit. The processing system described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing system configured to perform any of the methods described herein, or to manufacture a processing system comprising any apparatus described herein. An integrated circuit definition dataset may be, for example, an integrated circuit description.

Therefore, there may be provided a method of manufacturing, at an integrated circuit manufacturing system, a processing system as described herein. Furthermore, there may be provided an integrated circuit definition dataset that, when processed in an integrated circuit manufacturing system, causes the method of manufacturing a processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

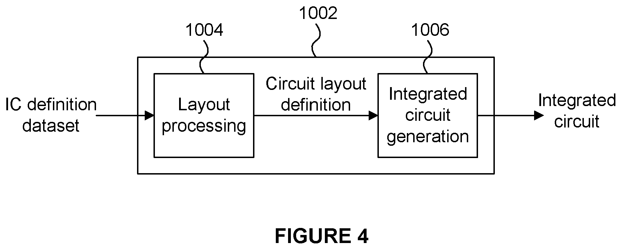

An example of processing an integrated circuit definition dataset at an integrated circuit manufacturing system so as to configure the system to manufacture a processing system will now be described with respect to Figure 4.

Figure 4 shows an example of an integrated circuit (IC) manufacturing system 1002 which is configured to manufacture a processing system as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a processing system as described in any of the examples herein), process the IC definition dataset, and generate an IC according to the IC definition dataset (e.g. which embodies a processing system as described in any of the examples herein). The processing of the IC definition dataset configures the IC manufacturing system 1002 to manufacture an integrated circuit embodying a processing system as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 4 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 4, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer-implemented method performed by a vector processing unit, wherein the vector processing unit comprises a vector mask register, VMR, and a buffer, wherein each of the VMR and the buffer is configured to store a vector mask value, wherein vector mask producing instructions cause a vector mask value to be produced and written to the VMR, and wherein processing of vector mask consuming instructions is dependent on a vector mask value, and wherein the method comprises:
updating the VMR with a respective vector mask value written to the VMR by a respective vector mask producing instruction; and
updating the buffer with a respective vector mask value produced by a respective in-flight vector mask producing instruction, wherein the buffer is updated each time a respective vector mask value is produced; and
processing a vector mask consuming instruction, said processing comprising:
determining whether the vector mask consuming instruction requires the respective vector mask value from the VMR or the buffer; and
based on said determining, obtaining the respective vector mask value from the VMR or the buffer.

2. The method of claim 1, wherein said determining is determined at the point that the vector mask consuming instruction is received by the vector processing unit and before the vector mask consuming instruction is dispatched.

3. The method of claim 1 or claim 2, wherein the vector processing unit comprises instruction control storage configured to store control logic and/or state associated with the vector mask consuming instruction, wherein the control logic and/or state indicates whether the vector mask consuming instruction requires the respective vector mask value from the VMR or the buffer.

4. The method of claim 3, wherein the instruction control storage is configured to store respective control logic and/or state associated with respective in-flight vector mask producing instructions, wherein the respective control logic and/or state indicates whether the in-flight vector mask producing instruction has written a respective vector mask value to the VMR.

5. The method of claim 3, comprising:
determining, based on the respective control logic and/or state associated with a respective in-flight vector mask producing instruction that the respective in-flight vector mask producing instruction has not yet written a respective vector mask value to the VMR; and
configuring the control logic and/or state associated with the vector mask consuming instruction to indicate that the vector mask consuming instruction requires the respective vector mask value from the buffer.

6. The method of claim 3, comprising:
determining, based on the respective control logic and/or state associated with a respective in-flight vector mask producing instruction that the respective in-flight vector mask producing instruction has written a respective vector mask value to the VMR; and
configuring the control logic and/or state associated with the vector mask consuming instruction to indicate that the vector mask consuming instruction requires the respective vector mask value from the VMR.

7. The method of any of claims 3 to 6, wherein the control logic and/or state associated with the vector mask consuming instruction comprises a flag, and wherein the instruction control storage is configured such that, the flag being set indicates that the vector mask consuming instruction requires the respective vector mask value from the buffer.

8. A processing system configured to perform the method of any preceding claim.

9. A method of manufacturing, using an integrated circuit manufacturing system, a processing system as claimed in claim 8.

10. Computer readable code configured to cause the method of any of claims 1 to 7 to be performed when the code is run.

11. A computer readable storage medium having encoded thereon the computer readable code of claim 10.

12. A vector processing unit comprising:
a vector mask register,VMR, configured to store a vector mask value most recently written to the VMR by a vector mask producing instruction; and
a buffer configured to store a vector mask value most recently produced by a vector mask producing instruction, and
wherein the vector processing unit is configured to process a vector mask consuming instruction by:
determining whether the vector mask consuming instruction requires the vector mask value stored in the VMR or the buffer; and
based on said determining, obtaining the vector mask value from the VMR or the buffer.

13. The vector processing unit of claim 12, wherein the vector processing unit is configured to determine whether the vector mask consuming instruction requires the vector mask value stored in the VMR or the buffer upon receipt of the vector mask consuming instruction.

14. The vector processing unit of claim 12 or claim 13, wherein the vector processing unit comprises instruction control storage configured to store control logic and/or state associated with the vector mask consuming instruction, wherein the control logic and/or state indicates whether the vector mask consuming instruction requires the respective vector mask value from the VMR or the buffer, and wherein the vector mask processing unit is configured to determine whether the vector mask consuming instruction requires the vector mask value stored in the VMR or the buffer based on the control logic and/or state.

15. The vector processing unit of claim 14, wherein the instruction control storage is configured to store respective control logic and/or state associated with respective vector mask producing instructions, wherein the respective control logic and/or state indicates whether the respective vector mask producing instruction has written a respective vector mask value to the VMR, and wherein the vector processing unit is configured to update the respective control logic and/or state when the respective vector mask processing instruction has written the respective vector mask value to the VMR.
